# EUROPÄISCHE PATENTSCHRIFT

(11) **EP 1 394 424 B1**
(45) Veröffentlichungstag und Bekanntmachung des Hinweises auf die Patenterteilung: **19.08.2009**
(21) Anmeldenummer: 03014086.7
(22) Anmeldetag: 23.06.2003
(51) Int. Cl.: F16C 13/00, D21G 1/02

(54) **Biegeausgleichswalze**
Roll with deflection compensation
Cylindre avec compensation de flexion

(30) Priorität: 26.08.2002 DE 10239097
(43) Veröffentlichungstag der Anmeldung: 03.03.2004
(73) Patentinhaber: Voith Patent GmbH, 89522 Heidenheim (DE)
(72) Erfinder: Schnyder, Eugen, 5622 Waltenschwil (CH)
(74) Vertreter: Manitz, Finsterwald & Partner GbR

(56) Entgegenhaltungen:
- CH-A- 607 783
- DE-A- 3 640 902
- DE-A- 4 430 666
- DE-A- 19 622 020
- DE-U- 9 301 417
- DE-U- 9 314 568
- DE-U- 20 102 620
- DE-U- 29 518 997
- US-A- 5 785 636
- US-A- 6 045 492

## Beschreibung

Die Erfindung betrifft eine Biegeausgleichswalze mit einem umlaufenden Walzenmantel, einem den Walzenmantel axial durchsetzenden drehfesten Joch und zwischen dem Joch und dem Walzenmantel angeordneten Stützelementen.

Bei den bisher üblichen Biegeausgleichswalzen treten angesichts der dort gewählten Paarung Stützelement/Mantelinnenfläche immer wieder Anlauf- oder Schleifprobleme auf. Überdies kommt Aluminiummänteln eine zunehmende Bedeutung zu. Ein Einsatz der bisher üblichen Bronzestützelemente in Verbindung mit einem solchen Aluminiummantel ist nun aber praktisch ausgeschlossen. Außerdem kann es bei sehr elastischen Walzenmänteln oder Stützelementen zu Kratzern kommen.

Eine Biegeausgleichswalze der eingangs genannten Art ist in der DE 93 14 568 U beschrieben. Bei dieser bekannten Walze kann ein jeweiliges Stützelement zumindest im Bereich seiner dem Walzenmantel zugewandten Stützfläche aus einem elastisch nachgiebigem Werkstoff bestehen, wobei es bevorzugt eine aus einem Kunststoff bestehende Kappe aufweist.

Bei einer aus der CH 607 783 C bekannten Biegaugleichswalze sind der Druckraum und die Lagerfläche eines jeweiligen Stützelementes durch ein gemeinsames Profilteil gebildet, das aus gummielastischem Material mit einer Armierung z.B. aus Textilfäden besteht. Das Profilteil kann auch mit einer Verstärkungsplatte aus Metall versehen sein.

In der DE 196 22 020 A ist eine Biegeausgleichswalze beschrieben, deren Stützelemente jeweils mit einem Kunststoffgleitbelag versehen sein können.

Aus der DE 44 30 666 A ist bereits eine Biegeausgleichswalze mit einem zwischen Walzenmantel und Stützelementen angeordneten Leiste aus Kunststoff bekannt.

Der Erfindung liegt die Aufgabe zugrunde, eine verbesserte Biegeausgleichswalze der eingangs genannten Art zu schaffen, bei der die zuvor genannten Nachteile beseitigt sind.

Diese Aufgabe wird erfindungsgemäß dadurch gelöst, dass die Stützelemente jeweils einen aus faserverstärktem Polyamid, faserverstärktem Polyethylen oder faserverstärktem Epoxidharz bestehenden Grundkörper besitzen und dass die der Innenseite des Walzenmantels zugewandten Stützflächen der Stützelemente mit einer Kunststoffbeschichtung versehen sind.

Aufgrund dieser Ausbildung kann die Reibung und entsprechend der Verschleiß auf ein Minimum reduziert werden. Neben den vielfachen tribologischen Vorteilen ist auch eine problemlose Wartung gewährleistet. So können beispielsweise bereits angeschliffene Bauteile auf einfachere und schnellere Weise repariert werden.

Insbesondere das Kunststoffmaterial der Kunststoffbeschichtung kann vorteilhafterweise mit Füllstoff versehen sein, wodurch die tribologischen Eigenschaften der Beschichtung verbessert, der Verschleiß verringert und die Festigkeit erhöht werden können. Abgesehen davon wird auch der Anteil beispielsweise an teuren Epoxidharzen für die Beschichtung entsprechend verringert.

Die Kunststoffbeschichtung kann beispielsweise aus thermoplastischem Kunststoff bestehen.

Gemäß einer zweckmäßigen Ausführungsform ist der Walzenmantel aus Schichten aufgebaut ist, wobei vorzugsweise Schichten aus Elastomeren unterschiedlicher Härte mit Verstärkerschichten gepaart sind.

Angesichts der erfindungsgemäßen Beschichtung der Mantelinnenseite bzw. der Stützelemente kann nunmehr insbesondere auch ein aus Aluminium bestehender Walzenmantel verwendet werden, ohne dabei die eingangs genannten Probleme in Kauf nehmen zu müssen.

Es können beispielsweise hydraulische Stützelemente vorgesehen sein. Diese können zum Beispiel mit Drucköl beaufschlagt werden, um die jeweiligen Stützkräfte zu erzeugen.

Die Stützelemente bzw. die Leiste können insbesondere hydrostatisch und/oder hydrodynamisch geschmiert sein.

Vorteilhafterweise sind Mittel zum Abführen von Lecköl aus dem Stützelementbereich vorgesehen. Es ist somit ein gezieltes Wegfördern von Lecköl beispielsweise in einen Behälter möglich.

Beim Beschichten der Stützelemente geht man bisher wie folgt vor:

Die Beschichtung wird durch Tauchen, Spritzen, Streichen, Gießen oder Aufziehen von Folie aufgebracht. Anschließend werden die Körper gesintert. In einem letzten Arbeitsgang erhalten sie dann - bisher durch mechanische Bearbeitung wie z.B. Schleifen usw. - ihre der Walzenschale exakt angepasste Kontur.

Eine weitere Aufgabe der Erfindung besteht nun darin, ein vereinfachtes Verfahren zur Herstellung eines Stützelements für eine erfindungsgemäße Biegeausgleichswalze anzugeben.

Das entsprechende erfindungsgemäße Verfahren zeichnet sich dadurch aus, dass ein Grundkörper erzeugt und mit einer Kunststoffbeschichtung versehen wird, dass der beschichtete Grundkörper in eine im Querschnitt allgemein U-förmige Form eingebracht wird, deren innere Bodenfläche komplementär zur gewünschten, an die Innenseite des Walzenmantels angepassten Kontur der Stützfläche des Stützelements bzw. der Leiste ausgestaltet ist, und dass die Form erhitzt und anschließend wieder abgekühlt wird, um die gewünschte Kontur für die beschichtete Stützfläche des Stützelements bzw. die Leiste zu erzeugen.

Der Herstellungsprozess wird damit deutlich vereinfacht. Indem die Negativform in einem ersten Abschnitt erhitzt und in einem zweiten Abschnitt gekühlt wird, erhält man auf einfache Weise in einem einzigen Arbeitsgang bereits auch die passende, d.h. präzise Kontur für die Stützelemente bzw. die Leiste.

Die erfindungsgemäße Biegeausgleichswalze ist vorteilhafterweise insbesondere anwendbar zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemitteln enthaltenden Vlies.

Die erfindungsgemäße Biegeausgleichswalze ist in vorteilhafter Weise insbesondere zur Herstellung von Faserstoff-, Span-, HDF-, MDF-, LDFund/oder OSB-Platten verwendbar.

So ist die erfindungsgemäße Biegeausgleichswalze zum Beispiel verwendbar in einer zu den genannten Zwecken eingesetzten, der Herstellung entsprechender Materialbahnen dienenden Presse mit einem umlaufenden, mit zum Beispiel einer Presstrommel einen Pressspalt bildenden Pressband, insbesondere Stahlband, sowie mit mehreren in Bahnlaufrichtung aufeinander folgenden Anpresseinheiten, die zumindest teilweise durch eine jeweilige Biegeausgleichswalze gebildet sind. In solchen Pressen ist der Pressspalt zumindest einseitig und vorzugsweise beidseitig beheizt. Es kann also sowohl die Presstrommel als auch das Stahlband beheizt sein. Die in Bahnlaufrichtung aufeinander folgenden Anpresselemente bzw. Biegeausgleichswalzen sind relativ dicht aufeinander folgend angeordnet, wobei sie auch in Gruppen aufgeteilt sein können. Bei einer gruppenweisen Anordnung der Anpresselemente sind diese innerhalb einer jeweiligen Gruppe relativ dicht aufeinander folgend angeordnet, während zwischen den Gruppen von Anpresselementen ein größerer Abstand vorliegen kann.

Die erfindungsgemäße Biegeausgleichswalze kann also beispielsweise in einer solchen Presse eingesetzt werden, wie sie in der EP 0 776 742 B1 und der DE 42 43 917 C1 beschrieben ist.

Grundsätzlich kann die erfindungsgemäße Biegeausgleichswalze beispielsweise in einer Papiermaschine, einem Kalander, einer Druckmaschine oder einer Vorrichtung zur Herstellung von Dekorpapier verwendet werden.

Beliebige andere Verwendungen sind denkbar.

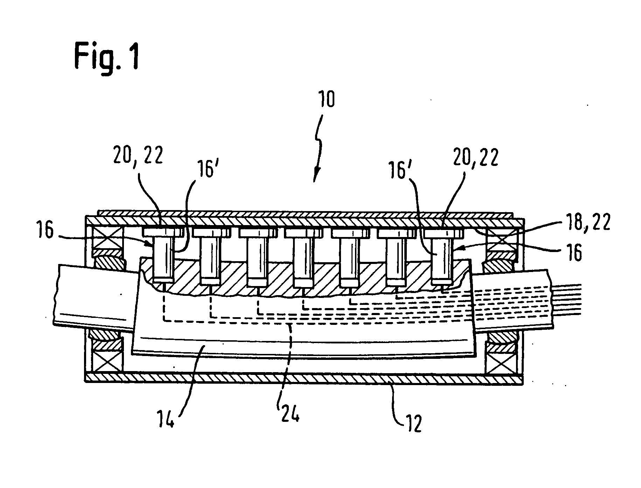

Die Erfindung wird im Folgenden anhand eines Ausführungsbeispiels unter Bezugnahme auf die Zeichnung näher erläutert.

Die einzige Figur der Zeichnung zeigt in schematische Längsschnittdarstellung eine Biegeausgleichswalze 10 für einen Einsatz z.B. in einer Vorrichtung oder Presse zur Herstellung von Materialbahnen, bei denen es sich beispielsweise um in einzelne Platten aufteilbare Faserplattenbahnen, Spanplattenbahnen und/oder dergleichen aus einem lignozelluloseund/oder zellulosehaltige Teilchen und zumindest ein wärmehärtendes Bindemittel enthaltenden Vlies handeln kann. Die Walze ist beispielsweise in Vorrichtungen oder Pressen zur Herstellung von HDF-, MDF-, LDFund/oder OSB-Platten verwendbar. Generell ist beispielsweise auch eine Verwendung in einer Papiermaschine, einem Kalander, einer Druckmaschine oder einer Maschine zur Herstellung von Dekorpapier denkbar.

Die Biegeausgleichswalze 10 umfasst einen umlaufenden Walzenmantel 12, ein den Walzenmantel 12 axial durchsetzendes drehfestes Joch 14 und zwischen dem Joch 14 und dem Walzenmantel 12 angeordnete Stützelemente 16 zur Ausübung einer jeweiligen Stützkraft auf die Innenseite 18 des Walzenmantels 12.

Die Innenseite 18 des Walzenmantels 12 kann mit einer Kunststoffbeschichtung 22 versehen sein und die dieser Mantelinnenseite 18 zugewandten Stützflächen 20 der Stützelemente 16 sind mit einer Kunststoffbeschichtung 22 versehen , wodurch die Reibung und entsprechend der Verschleiß deutlich reduziert werden. Die Stützelemente 16 besitzen jeweils einen aus Kunststoff bestehenden Grundkörper 16' wobei beispielsweise faserverstärkte Polyamide, oder faserverstärkte Epoxidharze in Betracht kommen können. Neben den vielfachen tribologischen Vorteilen ist auch die Wartung entsprechend vereinfacht. So können bereits angeschliffene Bauteile deutlich schneller repariert werden.

Die Kunststoffbeschichtung 22 kann beispielsweise aus thermoplastischem Kunststoff bestehen. Grundsätzlich sind jedoch auch andere Werkstoffe denkbar, wobei insbesondere solche bevorzugt sind, mit denen sich die Reibung verringern und/oder die Haltbarkeit erhöhen lässt. Das Kunststoffmaterial der Kunststoffbeschichtung 22 kann insbesondere auch mit Füllstoff angereichert sein. Dies dient nicht in erster Linie dazu, den Anteil der teuren Epoxidharze zu verringern, sondern vielmehr dazu, die tribologischen Eigenschaften der Beschichtung zu verbessern, den Verschleiß zu verringern und die Festigkeit zu erhöhen.

Angesichts der erfindungsgemäßen Kunststoffbeschichtung können nun insbesondere auch Walzenmäntel aus Aluminium eingesetzt werden.

Im vorliegenden Fall sind beispielsweise hydraulische Stützelemente 16 vorgesehen. Diese werden über Leitungen 24 mit Drucköl beaufschlagt, um die jeweiligen Stützkräfte zu erzeugen. Dabei können die verschiedenen Stützelemente 16 einzeln oder auch in Gruppen angesteuert werden. Sie können insbesondere hydrostatisch und/oder hydrodynamisch geschmiert sein.

Es können Mittel zum Abführen von Lecköl aus dem Stützelementbereich vorgesehen sein. Somit ist ein gezieltes Wegfördern von Lecköl beispielsweise in einen Behälter oder dergleichen möglich.

Bei der Herstellung eines jeweiligen Stützelements 16 kann beispielsweise wie folgt verfahren werden:

Zunächst wird der Grundkörper 16' erzeugt und mit der Kunststoffbeschichtung 22 versehen. Der beschichtete Grundkörper 16' wird dann in eine im Querschnitt allgemein U-förmige Form eingebracht, deren innere Bodenfläche komplementär zur gewünschten, an die Innenseite 18 des Walzenmantels 12 angepassten Kontur der Stützfläche 20 des Stützelements 16 ausgestaltet ist. Die Form wird dann erhitzt und anschließend wieder abgekühlt, um die gewünschte Kontur für die beschichtete Stützfläche 20 des Stützelements 16 zu erzeugen.

Die soeben beschriebene Biegeausgleichswalze 10 ist insbesondere verwendbar in einer Vorrichtung oder Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies. Sie ist also beispielsweise in einer solchen Vorrichtung oder Presse verwendbar, wie sie in der EP 0 776 742 B1 und der DE 42 43 917 C1 beschrieben ist. Die erfindungsgemäße Biegeausgleichswalze 10 ist insbesondere verwendbar zur Herstellung von Faserstoff-, Span-, HDF-, MDF-, LDFund/oder OSB-Platten. Grundsätzlich ist auch eine Verwendung zum Beispiel in einer Papiermaschine, einem Kalander, einer Druckmaschine, einer Maschine zur Herstellung von Dekorpapier, einer Textilmaschine und/oder dergleichen denkbar.

### Bezugszeichenliste

- 10: Biegeausgleichswalze
- 12: Walzenmantel
- 14: Joch
- 16: Stützelement
- 16': Grundkörper
- 18: Mantelinnenseite
- 20: Stützfläche
- 22: Kunststoffbeschichtung
- 24: Leitung

## Patentansprüche

1. Biegeausgleichswalze (10) mit einem umlaufenden Walzenmantel (12), einem den Walzenmantel (12) axial durchsetzenden drehfesten Joch (14) und zwischen dem Joch (14) und dem Walzenmantel (12) angeordneten Stützelementen (16),
**dadurch gekennzeichnet,**
**dass** die Stützelemente (16) jeweils einen aus faserverstärktem Polyamid, faserverstärktem Polyethylen oder faserverstärktem Epoxidharz bestehenden Grundkörper (16') besitzen und dass die der Innenseite (18) des Walzenmantels (12) zugewandten Stützflächen (20) der Stützelemente (16) mit einer Kunststoffbeschichtung (22) versehen sind.

2. Biegeausgleichswalze nach Anspruch 1,
**dadurch gekennzeichnet,**
**dass** die Innenseite (18) des Walzenmantels (12) mit einer Kunststoffbeschichtung (22) versehen ist.

3. Biegeausgleichswalze nach Anspruch 1 oder 2,
**dadurch gekennzeichnet,**
**dass** das Kunststoffmaterial der Kunststoffbeschichtung (22) mit Füllstoff versehen ist.

4. Biegeausgleichswalze nach einem der vorhergehenden Ansprüche,
**dadurch gekennzeichnet,**
**dass** die Kunststoffbeschichtung (22) aus thermoplastischem Kunststoff besteht.

5. Biegeausgleichswalze nach einem der vorhergehenden Ansprüche,
**dadurch gekennzeichnet,**
**dass** der Walzenmantel (12) aus Schichten aufgebaut ist, wobei vorzugsweise Schichten aus Elastomeren unterschiedlicher Härte mit Verstärkerschichten gepaart sind.

6. Biegeausgleichswalze nach einem der vorhergehenden Ansprüche,
**dadurch gekennzeichnet,**
**dass** der Walzenmantel (12) aus Aluminium besteht.

7. Biegeausgleichswalze nach einem der vorhergehenden Ansprüche,
**dadurch gekennzeichnet,**
**dass** hydraulische Stützelemente (16) vorgesehen sind.

8. Biegeausgleichswalze nach Anspruch 7,
**dadurch gekennzeichnet,**
**dass** die Stützelemente (16) mit Drucköl beaufschlagbar sind.

9. Biegeausgleichswalze nach einem der vorhergehenden Ansprüche,
**dadurch gekennzeichnet,**
**dass** die Stützelemente (16) hydrostatisch und/oder hydrodynamisch geschmiert sind.

10. Biegeausgleichswalze nach einem der vorhergehenden Ansprüche,
**dadurch gekennzeichnet,**
**dass** Mittel zum Abführen von Lecköl aus dem Stützelementbereich vorgesehen sind.

11. Verfahren zur Herstellung eines Stützelementes (16) bzw. einer Leiste für eine Biegeausgleichswalze (10) nach einem der vorhergehenden Ansprüche,
**dadurch gekennzeichnet,**
**dass** ein Grundkörper (16') erzeugt und mit einer Kunststoffbeschichtung (22) versehen wird, dass der beschichtete Grundkörper (16') in eine im Querschnitt allgemein U-förmige Form eingebracht wird, deren innere Bodenfläche komplementär zur gewünschten, an die Innenseite (18) des Walzenmantels (12) angepassten Kontur der Stützfläche (20) des Stützelements (16) bzw. der Leiste ausgestaltet ist, und dass die Form erhitzt und anschließend wieder abgekühlt wird, um die gewünschte Kontur für die beschichtete Stützfläche (20) des Stützelements (16) bzw. der Leiste zu erzeugen.

12. Verwendung der Biegeausgleichswalze (10) nach einem der vorhergehenden Ansprüche 1 bis 10 in einer Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies.

13. Verwendung der Biegeausgleichswalze (10) nach einem der vorhergehenden Ansprüche 1 bis 10 in einer Presse zur Herstellung von Faserstoff-, Span-, HDF-, MDF-, LDF- und/oder OSB-Platten.

14. Verwendung der Biegeausgleichswalze (10) nach einem der vorhergehenden Ansprüche 1 bis 10 in einer Papiermaschine, einem Kalander, einer Druckmaschine, einer Maschine zur Herstellung von Dekorpapier oder einer Textilmaschine.

## Claims

1. A deflection compensated roll (10) having a rotating roll jacket (12), a rotationally fixed yoke (14) passing axially through the roll jacket (12) and support elements (16) arranged between the yoke (14) and the roll jacket (12),
**characterised in that**
the support elements (16) each have a base body (16') consisting of fibre-reinforced polyamide, fibre-reinforced polyethylene or fibre-reinforced epoxy resin; and **in that** the support surfaces (20) of the support elements (16) facing the inner side (18) of the roll jacket (12) are provided with a plastic coating (22).

2. A deflection compensated roll in accordance with claim 1, **characterised in that** the inner side (18) of the roll jacket (12) is provided with a plastic coating (22).

3. A deflection compensated roll in accordance with claim 1 or claim 2, **characterised in that** the plastic material of the plastic coating (22) is provided with filler.

4. A deflection compensated roll in accordance with any one of the preceding claims, **characterised in that** the plastic coating (22) consists of a thermoplastic.

5. A deflection compensated roll in accordance with any one of the preceding claims, **characterised in that** the roll jacket (12) is made up of layers, with layers made of elastomers of different hardness preferably being paired with reinforcement layers.

6. A deflection compensated roll in accordance with any one of the preceding claims, **characterised in that** the roll jacket (12) consists of aluminium.

7. A deflection compensated roll in accordance with any one of the preceding claims, **characterised in that** hydraulic support elements (16) are provided.

8. A deflection compensated roll in accordance with claim 7, **characterised in that** the support elements (16) can be acted on by compressed oil.

9. A deflection compensated roll in accordance with any one of the preceding claims, **characterised in that** the support elements (16) are lubricated hydrostatically and/or hydrodynamically.

10. A deflection compensated roll in accordance with any one of the preceding claims, **characterised in that** means are provided for the drainage of leaked oil from the support element region.

11. A method for the manufacture of a support element (16) or of a rail for a deflection compensated roll (10) in accordance with any one of the preceding claims,
**characterised in that**
a base body (16') is produced and is provided with a plastic coating (22); **in that** the coated base body (16') is brought into a shape generally of U shape in cross-section whose inner base surface is made complementary to the desired contour of the support surface (20) of the support element (16) or of the rail matched to the inner side (18) of the roll jacket (12); and **in that** the shape is heated and is subsequently cooled again to produce the desired contour for the coated support surface (20) of the support element (16) or of the rail.

12. Use of the deflection compensated roll (10) in accordance with any one of the preceding claims 1 to 10 in a press for the manufacture of fibre plate webs, chipboard webs and/or the like which can be split into individual plates and are made from a fleece including particles containing lignocellulose and/or cellulose and at least one heat-curing binding agent.

13. Use of the deflection compensated roll (10) in accordance with any one of the preceding claims 1 to 10 in a press for the manufacture of fibre plates, chipboard plates, HDF plates, MDF plates, LDF plates and/or OSB plates.

14. Use of the deflection compensated roll (10) in accordance with any one of the preceding claims 1 to 10 in a paper making machine, a calender, a printing machine, a machine for the manufacture of decorative paper or a textile machine.

## Revendications

1. Cylindre avec compensation de flexion (10) comprenant une enveloppe de cylindre périphérique (12), une poutre (14) qui traverse axialement l'enveloppe de cylindre (12), et des éléments de soutien (16) agencés entre l'étrier (14) et l'enveloppe de cylindre (12),
**caractérisé en ce que** les éléments de soutien (16) possèdent chacun un corps de base (16') réalisé en polyamide renforcé de fibres, en polyéthylène renforcé de fibres, ou en résine époxy renforcée de fibres, et **en ce que** les surfaces de soutien (20), tournées vers le côté intérieur (18) de l'enveloppe de cylindre (12), des éléments de soutien (16) sont pourvues d'un revêtement en matière plastique (22).

2. Cylindre avec compensation de flexion selon la revendication 1,
**caractérisé en ce que** la face intérieure (18) de l'enveloppe de cylindre (12) est pourvue d'un revêtement en matière plastique (22).

3. Cylindre avec compensation de flexion selon la revendication 1 ou 2,
**caractérisé en ce que** la matière plastique du revêtement en matière plastique (22) est pourvue de matières de remplissage.

4. Cylindre avec compensation de flexion selon l'une des revendications précédentes,
**caractérisé en ce que** le revêtement en matière plastique (22) est en matière plastique thermoplastique.

5. Cylindre avec compensation de flexion selon l'une des revendications précédentes,
**caractérisé en ce que** l'enveloppe de cylindre (12) est réalisée en couches, de sorte que des couches en élastomères de duretés différentes sont appariées de préférence avec des couches de renforcement.

6. Cylindre avec compensation de flexion selon l'une des revendications précédentes,
**caractérisé en ce que** l'enveloppe de cylindre (12) est en aluminium.

7. Cylindre avec compensation de flexion selon l'une des revendications précédentes,
**caractérisé en ce qu'**il est prévu des éléments de soutien hydrauliques (16).

8. Cylindre avec compensation de flexion selon la revendication 7,
**caractérisé en ce que** les éléments de soutien (16) peuvent être alimentés en huile sous pression.

9. Cylindre avec compensation de flexion selon l'une des revendications précédentes,
**caractérisé en ce que** les éléments de soutien (16) sont lubrifiés par voie hydrostatique et/ou hydrodynamique.

10. Cylindre avec compensation de flexion selon l'une des revendications précédentes,
**caractérisé en ce qu'**il est prévu des moyens pour évacuer les fuites d'huile hors de la zone de l'élément de soutien.

11. Procédé pour réaliser un élément de soutien (16) ou respectivement une poutre pour un cylindre avec compensation de flexion (10) selon l'une des revendications précédentes,
**caractérisé en ce que** l'on produit un corps de base (16') et qu'on le pourvoit d'un revêtement en matière plastique (22), **en ce que** le corps de base revêtu (16') est amené dans un moule avec une section transversale généralement en forme de U, dont la surface de fond inférieure est réalisée de manière complémentaire au contour souhaité, adapté à la face intérieure (18) de l'enveloppe de cylindre (12), de la surface de soutien (20) de l'élément de soutien (16) ou de la poutre, et **en ce que** le moule est réchauffé et ensuite à nouveau refroidi afin de générer le contour souhaité et pour la surface de soutien revêtue (20) de l'élément de soutien (16) ou de la poutre.

12. Utilisation du cylindre avec compensation de flexion (10) selon l'une des revendications précédentes 1 à 10, dans une presse pour la fabrication de bandes planes en fibres, de bandes planes en aggloméré et/ou similaires, capables d'être subdivisées en plaques individuelles, à partir d'une nappe contenant des particules de lignocellulose et/ou contenant de la cellulose et au moins un liant durcissant à chaud.

13. Utilisation du cylindre avec compensation de flexion (10) selon l'une des revendications précédentes 1 à 10 dans une presse pour la fabrication de plaques à base de fibres, en bois aggloméré, en fibres à haute densité, à moyenne densité, à basse densité et/ou des plaques OSB.

14. Utilisation du cylindre avec compensation de flexion (10) selon l'une des revendications précédentes 1 à 10 dans une machine à papier, une calandre, une machine d'imprimerie, une machine pour la fabrication de papier de décoration ou une machine textile.
